# EUROPÄISCHE PATENTSCHRIFT

(11) **EP 3 519 214 B1**
(45) Veröffentlichungstag und Bekanntmachung des Hinweises auf die Patenterteilung: **09.09.2020**
(21) Anmeldenummer: 17784199.6
(22) Anmeldetag: 27.09.2017
(51) Int. Cl.: B60D 1/48

(54) **ANHÄNGEKUPPLUNG MIT EINEM STÜTZELEMENT**
TRAILER COUPLING HAVING A SUPPORT ELEMENT
DISPOSITIF D'ATTELAGE COMPRENANT UN ÉLÉMENT DE SUPPORT

(30) Priorität: 30.09.2016 DE 102016118678; 15.12.2016 DE 102016124563
(43) Veröffentlichungstag der Anmeldung: 07.08.2019
(73) Patentinhaber: WESTFALIA - Automotive GmbH, 33378 Rheda-Wiedenbrück (DE)
(72) Erfinder: ANGERMANN, Kay, 04720 Döbeln (DE); GRAUTE, Hendrik, 33415 Vert (DE); GRINGEL, Raphael, 33647 Bielefeld (DE); KUHLEN, Arne, 59320 Ennigerloh (DE)
(74) Vertreter: Patentanwälte Bregenzer und Reule Partnerschaftsgesellschaft mbB
(86) Internationale Anmeldenummer: PCT/EP2017/074457
(87) Internationale Veröffentlichungsnummer: WO 2018/060228

(56) Entgegenhaltungen:
- DE-A1-102013 018 771
- DE-U- 1 787 848
- DE-U1- 7 808 690

## Beschreibung

Die Erfindung betrifft eine Anhängekupplung für ein Kraftfahrzeug mit einer Trägeranordnung, die einen zur Anordnung an einem Heck eines Kraftfahrzeugs vorgesehenen und zumindest abschnittsweise als Profilteil ausgestalteten Querträger und einen an dem Querträger gehaltenen Halter zum Halten eines Kupplungselements, insbesondere eines Kupplungsarms, der Anhängekupplung aufweist, wobei das Kupplungselement zur Befestigung eines Anhängers oder eines Lastenträgers vorgesehen ist, wobei der Halter anhand eines Zugankers einer Zugankeranordnung, insbesondere einer Schraube, mit dem Querträger verbunden ist, wobei der Zuganker den Querträger entlang seiner Zuganker-Spannachse durchdringt und eine von der Zuganker-Spannachse oder einer zu der Zuganker-Spannachse parallelen Achse durchsetzte Widerlagerfläche des Halters gegen eine Seitenwand des Querträgers spannt, die eine Durchtrittsöffnung für den Zuganker aufweist.

Eine derartige Anhängekupplung ist z.B. in DE 10 2013 018 771 A1 beschrieben. Problematisch bei dieser Anhängekupplung ist es, dass beispielsweise der Schraubbolzen der Zugankeranordnung frei in der Durchtrittsöffnung der Seitenwand des Querträgers steht, sodass Scherkräfte auftreten können, die quer zur Spannachse auf den Schraubbolzen einwirken, diesen also auch beschädigen können. Zur Vermeidung dieser Problematik ist der Querschnitt der Durchtrittsöffnung bei der bekannten Anhängekupplung weit, so dass der Schraubbolzen quer zu seiner Spannachse nicht oder kaum belastet ist.

Es ist daher die Aufgabe der vorliegenden Erfindung, eine hinsichtlich ihrer Belastbarkeit verbesserte Anhängekupplung bereitzustellen.

Zur Lösung der Aufgabe ist bei einer Anhängekupplung der eingangs genannten Art vorgesehen, dass die Zugankeranordnung ein Stützelement mit einer Stützfläche und einem vor die Stützfläche in Richtung der Zuganker-Spannachse vorstehenden Stützvorsprung aufweist, der in die Durchtrittsöffnung der Seitenwand eindringt, wobei sich die Stützfläche des Stützelements mit mindestens einer Kraftkomponente in Richtung der Spannachse an der Seitenwand des Querträgers neben der Durchtrittsöffnung und der Stützvorsprung mit mindestens einer Kraftkomponente quer zu der Spannachse in der Durchtrittsöffnung abstützt.

Die Kraftkomponente kann beispielsweise eine rechtwinkelig zu der Spannachse oder schrägwinkelig zu der Spannachse stehende Kraftkomponente umfassen oder sein. Die Kraftkomponente ist beispielsweise als eine Stützkraftkomponente zu verstehen.

Der Querträger ist beispielsweise ganz oder teilweise als Hohlprofil ausgestaltet.

Ein bevorzugtes Konzept sieht vor, dass die Stützfläche des Stützelements der Widerlagerfläche des Halters gegenüber liegt, sodass die Seitenwand des Querträgers zwischen die Stützfläche und die Widerlagerfläche sandwichartig geklemmt ist. Dabei ist auch diejenige Ausführungsform möglich, dass zwischen der Seitenwand des Querträgers und der Widerlagerfläche noch eine weitere Lage, insbesondere ein weiteres Stützelement vorhanden ist. Beispielweise kann dieses weitere Stützelement als eine Platte ausgestaltet sein oder eine Platte aufweisen.

Das Stützelement ist zweckmäßigerweise ein von einem Zuganker, Beispiel Weise einem Schraubbolzen, einer Niet oder dergleichen separates Bauteil. Weiterhin ist es vorteilhaft, wenn das Stützelement eine vom Halter separates Bauteil ist. Somit kann das Stützelement bei Bedarf verwendet werden. Die Herstellung ist einfach. Das Stützelement kann einen Bestandteil eines Montagesatzes bilden.

Das Stützelement kann z.B. in einem Innenraum des Profilteils angeordnet sein. Das Stützelement kann aber auch, insbesondere in der Ausgestaltung als ein vom Halter separates Bauteil, außenseitig am Querträger anliegen. Mithin ist das Stützelement in dieser Ausführungsform außerhalb des Profilteils angeordnet, abgesehen vom mindestens einen Stützvorsprung, der in die Durchtrittsöffnung des Profilteils eintritt.

Der Stützvorsprung kann beispielsweise eine Aufnahme oder Durchtrittsöffnung aufweisen, in die der Zuganker eindringt oder die der Zuganker durchdringt. Es ist aber auch möglich, dass vom Stützvorsprung ein Befestigungsabschnitt absteht, der beispielsweise zu einer der bislang erläuterten Seitenwand gegenüberliegenden Seitenwand gegenüberliegt. An diesen Befestigungsabschnitt kann zum Beispiel von außen her ein Schraubmittel, insbesondere eine Mutter, aufgeschraubt sein.

Bevorzugt ist es, wenn das Stützelement plattenartig ist. Das Stützelement kann also beispielsweise eine Stützplatte umfassen.

Weiterhin ist es vorteilhaft, wenn das Stützelement konturgleich mit der Seitenwand des Querträgers ist. So kann beispielsweise bei einer gerundeten Seitenwand des Querträgers eine gerundete Kontur beim Stützelement vorgesehen sein. Beispielsweise kann eine muldenartig ausgerundete Platte das Stützelement grundsätzlich bilden. Es ist aber auch möglich, dass beispielsweise die Stirnseite der später noch erläuterten Hülse oder Stützhülse eine Kontur hat, die zur Innenkontur oder Außenkontur des Querträgers passt.

Ein bevorzugtes Konzept sieht vor, dass das Stützelement sich flächig an dem Querträger abstützt. Beispielsweise stützt sich das Stützelement mit einer Grundfläche am Querträger ab, insbesondere in der Ausgestaltung als Stütz-Platte.

Das Stützelement kann nur einen einzigen Stützvorsprung aufweisen, beispielsweise in einer Ausgestaltung als Stützhülse. Bevorzugt ist jedoch auch die Ausführungsform, bei der das Stützelement zwei oder weitere Stützvorsprünge aufweist. Insbesondere kann das Stützelement in der Art einer Stützplatte ausgestaltet sein, an der mehrere, beispielsweise mindestens zwei, Stützvorsprünge zum Eindringen in entsprechende Durchtrittsöffnungen oder Aufnahmen am Querträger vorhanden sind.

Das Stützelement weist zweckmäßigerweise einen Kopf auf, der in einer zweiten Durchtrittsöffnung einer zweiten Seitenwand aufgenommen ist, die der Seitenwand des Querträgers gegenüberliegt, welche den Stützvorsprung aufnimmt und somit eine erste Seitenwand bildet.

An dieser Stelle sei erwähnt, dass das Profilteil ein geschlossenes Profil oder ein seitlich offenes Profil, zumindest abschnittsweise aufweisen kann. So kann das Profilteil beispielsweise im Querschnitt U-förmig sein. Das Profilteil kann aber auch ein geschlossenes Profil sein, zum Beispiel ein Profil mit rechteckigem oder rundem oder ovalem Querschnitt. Ein im Querschnitt U-förmiges Profilteil oder Profil hat beispielsweise in Gestalt der Seitenschenkel einander gegenüberliegende erste und zweite Seitenwände.

Das Profilteil des Querträgers kann sich über die gesamte Länge des Querträgers homogen erstrecken, d. h. dass beispielsweise der Querträger über seine gesamte Länge im Querschnitt rund und/oder geschlossen ist. Es ist aber auch möglich, dass der Querträger über seine Länge unterschiedliche Querschnitte oder Profilkonturen aufweist. So kann der Querträger beispielsweise an einem mittleren Abschnitt ein geschlossenes Profil aufweisen, beispielsweise ein rundes Profil, während er an seinen Längsenden beispielsweise L-förmig oder U-förmig im Querschnitt ist. Der Querträger kann aus einem einzigen Rohling gefertigt sein, also sozusagen einstückig sein, beispielsweise durch eine Umformung, Extrusion oder dergleichen. Es ist aber auch möglich, dass der Querträger miteinander verbundene Abschnitte, beispielsweise Profile unterschiedlicher Art und/oder Geometrie, aufweist, die miteinander verschweißt, verklebt oder dergleichen anderweitig miteinander verbunden sind.

Der Kopf kann frei in der Durchtrittsöffnung der zweiten Seitenwand stehen. Bevorzugt ist es, wenn sich der Kopf quer zu der Spannachse an mindestens einer Innenkontur der zweiten Durchtrittsöffnung abstützt. Beispielweise können der Kopf eine runde Außenkontur und die zweite Durchtrittsöffnung eine Runde Innenkontur aufweisen, sodass der Kopf formschlüssig in der Durchtrittsöffnung aufgenommen ist. Die runden Außenkonturen und Innenkonturen ermöglichen eine Drehbarkeit des Kopfes, sodass der Kopf beispielsweise bei der Ausgestaltung des Stützelements als Schraube drehbar ist. Es ist aber auch möglich, dass die Außenkontur des Kopfes und die Innenkontur der zweiten Durchtrittsöffnung eine Verdrehsicherung bilden oder aufweisen, beispielsweise einen polygonalen Querschnitt haben. Somit kann der Kopf verdrehgesichert in der zweiten Durchtrittsöffnung aufgenommen sein.

Der Kopf kann zum Beispiel der Kopf einer Schraube sein, aber auch der Kopf eines später noch erläuterten als Stützhülse ausgestalteten Stützelements.

Der Kopf kann seitlich vor die zweite Durchtrittsöffnung oder die Durchtrittsöffnung der zweiten Seitenwand vorstehen. Dabei ist es möglich, dass der Kopf beispielsweise die zweite Seitenwand in Richtung der ersten Seitenwand oder des Halters belastet. Mithin kann also der Kopf sozusagen die zweite Seitenwand in Richtung des Halters spannen.

Bei dieser Maßnahme kann vorgesehen sein, dass der Querschnitt des Profilteils bzw. Querträgers unbeeinträchtigt oder unbeschädigt ist. Es ist aber auch eine gewisse Verformung möglich, d.h. dass der Kopf den Querträger in Richtung des Halters etwas verformt, was einen besonders festen Halt ermöglicht.

Eine bevorzugte Ausführungsform der Erfindung sieht beispielsweise vor, dass eine die erste und die zweite Seitenwand verbindende Seitenwand, beispielsweise einander gegenüberliegende Seitenwände, durch den Zuganker, beispielsweise dessen Kopf, durch eine Mutter, die auf den Zuganker aufgeschraubt ist oder dergleichen, quer zu der Spannachse verformt ist. Beispielsweise kann eine Mulde oder Einbuchtung durch diese Verformung an der Seitenwand gebildet sein. Die Seitenwand ist zum Beispiel eine obere oder untere Seitenwand des Querträgers (in Gebrauchslage bzw. im am Kraftfahrzeug montierten Zustand).

Die Stützfläche ist insbesondere an einem Schraubbolzen vorgesehen, der mit einem Schraubabschnitt zu dem Halter vorsteht, beispielsweise in eine Schraubaufnahme des Halters eingeschraubt ist oder eine Durchtrittsöffnung des Halters durchdringt und mit seinem vor die Durchtrittsöffnung vorstehenden Abschnitt durch eine Mutter gesichert ist. Die Stützfläche steht in der Art einer Stufe seitlich vor den Schraubabschnitt vor. Mithin ist eine Art Stufenbolzen gebildet.

Der Stützvorsprung kann z.B. durch den Schraubabschnitt oder einen zwischen dem Schraubabschnitt und der Stützfläche vorgesehenen Bolzenabschnitt gebildet sein. An dem Bolzenabschnitt ist zweckmäßigerweise kein Schraubgewinde vorgesehen.

Die Stützfläche kann auch an einer Stützhülse vorgesehen sein, die eine Durchtrittsöffnung für den Zuganker aufweist und vom Zuganker durchsetzt ist. Die Stützhülse ist zweckmäßigerweise im Innenraum oder einem Innenraum des Profilteils angeordnet. Der Zuganker ist beispielsweise von einem Schraubbolzen gebildet, der durch die Stützhülse hindurch gesteckt und insbesondere mit dem Halter verschraubt ist. Am Halter kann aber auch eine Mutter vorgesehen sein, um den Zuganker zu verspannen.

Die Stützhülse weist einen Kopfabschnitt auf, der seitlich vor die zweite Durchtrittsöffnung vorsteht. In dem Kopfabschnitt ist zweckmäßigerweise ein Kopf des Zugankers, zum Beispiel ein Schraubenkopf, eine Mutter oder dergleichen, aufgenommen. Die Kopfaufnahme kann ebenfalls seitlich vor die zweite Durchtrittsöffnung vorstehen. Der Kopfabschnitt kann beispielsweise dazu dienen, die zweite Seitenwand in Richtung der ersten Seitenwand zu belasten. Wenn der Kopf des Zugankers ebenfalls im Kopfabschnitt aufgenommen ist, steht dieser vorzugsweise ebenfalls seitlich vor die Durchtrittsöffnung vor. Somit kann der Kopf des Zugankers unmittelbar auf die zweite Seitenwand einwirken.

Es ist auch möglich, dass die Stützhülse nicht vor eine von der ersten Seitenwand abgewandte Außenseite der zweiten Seitenwand vorsteht, beispielsweise wenn sie mit der Seitenwand oder hinter die Außenseite zurück steht. Beispielsweise ist die Stützhülse in Bezug auf die Außenseite sozusagen unterbündig. Wenn der Kopf des Zugankers in Richtung des Halters geschraubt wird oder eine Mutter auf den Zuganker aufgeschraubt wird, kann dieser beispielsweise die zweite Seitenwand in Richtung des Halters belasten, ohne dass die Stützhülse sozusagen im Weg ist.

Bevorzugt ist es, wenn mindestens ein Zuganker oder alle Zuganker der Zugankeranordnung nicht vor eine Seitenwand, oben auch als zweite Seitenwand bezeichnet, des Querträgers vorsteht, die der den Stützvorsprung aufnehmenden Seitenwand gegenüberliegt. Somit sind keine Schraubenköpfe sozusagen im Weg. Es ist aber möglich, dass der Zuganker oder eine Hülse, in der der Zuganker aufgenommen ist, insbesondere die Stützhülse, in der sozusagen zweiten Seitenwand, quer zu der Spannachse abgestützt ist. Dies wird bei einem Ausführungsbeispiel der Zeichnung noch deutlicher.

An dem Halter ist zweckmäßigerweise eine Aufnahme für den Stützvorsprung vorgesehen, in die der Stützvorsprung eindringt. Der Stützvorsprung ist zweckmäßigerweise in der Aufnahme quer zu der Spannachse abgestützt, bevorzugt nicht nur über einen Teilumfang, sondern über seinen gesamten Außenumfang. Somit hat der Stützvorsprung quer zu der Spannachse eine Abstützung am Halter. Der Zuganker ist da doch im Wesentlichen nur entlang seiner Längsachse oder Spannachse durch Kräfte belastet. Bevorzugt ist es, wenn sich der Stützvorsprung einerseits in der Aufnahme des Halters und andererseits in der Durchtrittsöffnung des Querträgers quer zur Spannachse abstützt, insbesondere in mehreren Richtungen quer zur Spannachse oder allen Richtungen quer zur Spannachse. Dann nimmt der Stützvorsprung Querkräfte quer zur Spannachse auf, die somit den Zuganker nicht oder nur unwesentlich belasten können.

Der Stützvorsprung bildet also beispielsweise eine Längsführung für den Zuganker.

Vorteilhaft ist vorgesehen, dass der Halter mindestens eine Seitenstützfläche aufweist, die vor die Widerlagerfläche neben dem Zuganker vorsteht und an dem Querträger anliegt, so dass der Halter an dem Querträger seitlich neben dem Zuganker bezüglich einer quer zu der Zuganker-Spannachse des Zugankers wirkenden Kraft abgestützt ist.

Man könnte die Kraft auch als mindestens eine Kraft bezeichnen, d.h. so dass der Halter an dem Querträger durch die mindestens eine Seitenstützfläche seitlich neben dem Zuganker bezüglich mindestens einer quer zu der Zuganker-Spannachse des Zugankers wirkenden Kraft abgestützt ist.

Es ist ein Grundkonzept dabei, dass der Querträger und der Halter sich seitlich neben dem Zuganker aneinander abstützen, so dass quer zur Zuganker-Spannachse des Zugankers auf den Halter einwirkende Kräfte, beispielsweise Stützkräfte am Kupplungsarm oder Kupplungselement oder Schub-/Zugkräfte am Kupplungselement, über die mindestens eine Seitenstützfläche auf den Querträger übertragen werden. Der Zuganker wird dadurch ausschließlich oder zumindest im Wesentlichen ausschließlich in Richtung seiner Zuganker-Spannachse oder Zugachse kraftbelastet, muss also nur Zugkräfte aufnehmen, während quer zu seiner Zuganker-Spannachse wirkende Kräfte durch die mindestens eine seitliche Seitenstützfläche des Halters zumindest teilweise abgefangen werden.

Die Kraft, mit der die mindestens eine Seitenstützfläche den Halter und den Querträger aneinander abstützt, kann eine oder mehrere Kräfte umfassen und/oder eine oder mehrere Kraftkomponenten aufweisen, beispielsweise eine in Y-Richtung oder Fahrzeugquerrichtung verlaufende Kraftkomponente und/oder eine in Z-Richtung bzw. parallel zur Fahrzeughochachse verlaufende Kraftkomponente.

Die mindestens eine Seitenstützfläche kann beispielsweise den Halter bezüglich des Querträgers in Bezug auf ein Drehmoment abstützen, welches um die Zuganker-Spannachse herum verläuft. Die Abstützung des Halters anhand der Seitenstützfläche bezüglich des Querträgers kann aber auch eine Dreh-Abstützung oder eine Abstützung bezüglich eines Drehmoments sein, welches um eine zur Zuganker-Spannachse winkelige, insbesondere rechtwinkelige, Drehachse zwischen dem Halter und dem Querträger auftritt, die insbesondere die Zuganker-Spannachse im Bereich des Zugankers schneidet. Wenn also die Zuganker-Spannachse beispielsweise in Fahrtrichtung oder X-Richtung verläuft, kann die mindestens eine Seitenfläche ein Drehmoment bezüglich der X Richtung und/oder ein Drehmoment bezüglich einer Y-Richtung oder Fahrzeugquerrichtung und/oder ein Drehmoment bezüglich einer Z-Richtung oder einer zur Fahrzeughochachse parallelen Richtung abstützen.

Bevorzugt ist es, wenn die Widerlagerfläche und die mindestens eine Seitenstützfläche rechtwinkelig zueinander sind. Die mindestens eine Seitenstützfläche erstreckt sich also vorzugsweise parallel zu der Zuganker-Spannachse des Zugankers.

Weiterhin kann die mindestens eine Seitenstützfläche eine gerundete und/oder zu der Widerlagerfläche nicht rechtwinkelige Seitenstützfläche sein oder eine solche Seitenstützfläche umfassen. Beispielsweise kann die mindestens eine Seitenstützfläche zu der Widerlagerfläche etwa wie der Seitenschenkel einer V-förmigen Konfiguration schrägwinkelig stehen.

Die Kraft, bezüglich derer der Halter an dem Querträger anhand der mindestens einen Seitenstützfläche abgestützt ist, verläuft zweckmäßigerweise rechtwinkelig oder in einem Winkel von etwa 90°, d. h. beispielsweise 80° bis 100°, vorzugsweise 85° bis 95°, zu der Zuganker-Spannachse des Zugankers. Insbesondere verläuft die Stützkraft, die die Seitenstützfläche bereitstellt, vorzugsweise in Gebrauchslage der Anhängekupplung etwa vertikal.

Die mindestens eine Seitenstützfläche ist beispielsweise an einem vor einen Grundkörper des Halters vorstehenden Stützschenkel vorgesehen.

Die mindestens eine Seitenstützfläche kann aber auch als eine Vertiefung an einem Grundkörper des Halters ausgestaltet sein. Am Boden der Vertiefung ist zweckmäßigerweise die Widerlagerfläche vorgesehen.

Ein zweckmäßiges Konzept sieht vor, dass die mindestens eine Seitenstützfläche und die Widerlagerfläche kontinuierlich ineinander übergehen. Weiterhin ist es vorteilhaft, wenn zwischen der Seitenstützfläche und der Widerlagerfläche keine Kante vorgesehen ist.

Beispielsweise können die Widerlagerfläche und die mindestens eine Seitenstützfläche eine Krümmungskontur ausbilden oder aufweisen. Die Krümmungskontur kann beispielsweise kreisförmig, elliptisch oder dergleichen sein.

Die mindestens eine Seitenstützfläche und die Widerlagerfläche können auch Abschnitte einer bogenförmigen oder einen bogenförmigen Querschnitt aufweisenden Gesamtstützfläche sein.

Bevorzugt ist vorgesehen, dass zwischen der Widerlagerfläche und der mindestens einen Seitenstützfläche eine an einen Kantenbereich des Querträgers angepasste, beispielsweise gerundete, Aufnahmekontur vorgesehen ist.

Weiterhin vorteilhaft ist es, wenn der Querträger an der mindestens einen Seitenstützfläche und der Widerlagerfläche sowie einer sich zwischen der Seitenstützfläche und der Widerlagerfläche erstreckenden Aufnahmekontur flächig und/oder formschlüssig anliegt.

Ein Konzept kann vorsehen, dass die mindestens eine Seitenstützfläche und die Widerlagerfläche eine L-förmige Konfiguration bilden.

Es ist weiterhin möglich, dass die Seitenstützfläche und die Widerlagerfläche die einzigen Stützflächen bilden, mit denen der Halter am Querträger abgestützt ist.

Weiterhin ist es vorteilhaft, wenn der Halter anhand der Widerlagerfläche und einer einzigen Seitenstützfläche am Querträger abgestützt ist. Diese Seitenstützfläche ist dabei zweckmäßigerweise an einer Unterseite des Querträgers oder einer Fahrbahnoberfläche zugewandten Oberfläche des Querträgers abgestützt.

Die Widerlagerfläche ist in Gebrauchslage zweckmäßigerweise vertikal orientiert.

Die mindestens eine Seitenstützfläche verläuft in Gebrauchslage vorteilhaft horizontal.

Weiterhin ist es möglich, dass der Seitenstützfläche keine weitere Seitenstützfläche des Halters gegenüber liegt.

Es ist aber auch möglich, dass die Widerlagerfläche sozusagen einen Boden einer klammerartigen Aufnahme bildet, bei der vor die Widerlagerfläche zwei Seitenstützflächen vorstehen, die einander gegenüberliegen und zwischen denen der Querträger aufgenommen ist.

Bevorzugt ist vorgesehen, dass die mindestens eine Seitenstützfläche eine erste Seitenstützfläche und eine zweite Seitenstützfläche umfasst, die einander gegenüberliegen, sodass der Querträger zwischen der ersten und zweiten Seitenstützfläche aufgenommen ist.

Ein bevorzugtes Konzept sieht dabei eine U-förmige Konfiguration vor, das heißt dass die Widerlagerfläche am Boden und die einander gegenüberliegenden Seitenstützflächen an Seitenschenkeln der Aufnahme vorgesehen sind.

Die einander gegenüberliegenden Seitenstützflächen sind beispielsweise U-förmig oder V-förmig angeordnet. Eine Aufnahme für den Querträger mit den Seitenstützflächen hat also beispielsweise einen U-förmigen oder V-förmigen Querschnitt.

Weiterhin ist es vorteilhaft, wenn sich die mindestens eine Seitenstützfläche an einer in Gebrauchslage oberen oder unteren Oberfläche des Querträgers abstützt. Die Seitenstützfläche stützt sich also beispielsweise an einer Oberfläche des Querträgers ab, die der oder einer Fahrbahnoberfläche zugewandt ist oder von der Oberfläche abgewandt ist. Wenn zwei Seitenstützflächen vorhanden sind, können sich diese selbstverständlich an einer oberen und unteren bzw. einer von der Fahrbahnoberfläche abgewandten und einer der Fahrbahnoberfläche zugewandten Oberfläche des Querträgers abstützen.

Ein bevorzugtes Konzept sieht vor, dass die mindestens eine Seitenstützfläche eine Seitenstützfläche ist, welche an einem Stützvorsprung angeordnet ist, der in eine Aufnahme am Querträger eingreift. Die Aufnahme kann beispielsweise eine Vertiefung oder Mulde sein. Die Vertiefung ist beispielsweise an einem Kantenbereich des Querträgers vorgesehen.

Bevorzugt ist es, wenn der Halter mindestens zwei Stützvorsprünge aufweist, zwischen denen, der Querträger angeordnet ist.

Es ist auch möglich, dass die Aufnahme, in welche der Stützvorsprung eingreift, eine Durchtrittsöffnung oder ein Loch am Querträger ist. Insbesondere ist die Durchtrittsöffnung vom Zuganker durchdrungen.

Der Stützvorsprung oder der mindestens eine Stützvorsprung ist zweckmäßigerweise neben der Widerlagerfläche oder an der Widerlagerfläche angeordnet. Beispielsweise steht der Stützvorsprung vor die Widerlagerfläche vor. Es ist möglich, dass der Stützvorsprung beispielsweise quermittig oder längsmittig oder beides an der Widerlagerfläche angeordnet ist.

Weiterhin vorteilhaft ist es, wenn der Stützvorsprung eine Schraubaufnahme zum Einschrauben des Zugankers aufweist. Mithin kann also der Zuganker in den Stützvorsprung eingeschraubt werden. Es ist auch möglich, dass der Stützvorsprung eine Durchtrittsöffnung für den Zuganker aufweist. Beispielsweise kann der Zuganker die Durchtrittsöffnung des Stützvorsprungs durchdringend mit dem Halter verbindbar oder verbunden sein. Der Zuganker kann beispielsweise ein stabförmiger Körper sein, der vom Halter absteht und der den Stützvorsprung durchsetzt.

Bevorzugt ist es, wenn zwischen dem Halter und dem Querträger ein Stützelement angeordnet ist, welches Durchtrittsöffnungen für den Zuganker aufweist, insbesondere mehrere Durchtrittsöffnungen. Zum Beispiel kann das Stützelement plattenartig sein. An dem Stützelement können beispielsweise zwei oder weitere Durchtrittsöffnungen für Zuganker vorgesehen sein, wobei diese Zuganker-Durchtrittsöffnungen zweckmäßigerweise in einer Reihenrichtung nebeneinander angeordnet sind. Die Reihenrichtung verläuft entlang oder parallel zu einer Längsrichtung des Querträgers.

Ein bevorzugtes Konzept sieht z.B. vor, dass das Stützelement Durchtrittsöffnungen für exakt oder mindestens zwei Zuganker aufweist.

Weiterhin ist es vorteilhaft, wenn an dem Stützelement mindestens ein Stützvorsprung vorhanden ist, welcher in eine Aufnahme oder Durchtrittsöffnung des Querträgers eintritt. Das Stützelement kann also beispielsweise eine oder mehrere der Seitenstützflächen zur Abstützung an dem Querträger bereitstellen.

Das Stützelement selbst wiederum ist vorteilhaft an dem Halter abgestützt, zumindest an der Widerlagerfläche des Halters. Es ist möglich, dass das Stützelement eine oder mehrere der Seitenstützflächen bereitstellt, der Halter selbst jedoch den Querträger nicht unmittelbar seitlich neben der Widerlagerfläche abstützt.

Die vorgenannte Maßnahme ist insbesondere dann ohne weiteres realisierbar, wenn folgende vorteilhafte Ausgestaltung getroffen ist:
Das Stützelement stützt sich zweckmäßigerweise an der Widerlagerfläche und der mindestens einen Seitenstützfläche des Halters ab. Es ist aber auch möglich, dass das Stützelement eine an eine zum Beispiel durch die Widerlagerfläche und die mindestens eine Seitenstützfläche des Halters definierte Innenkontur des Halters angepasste Außenkontur aufweist und sich die Außenkontur des Stützelements an der Innenkontur des Halters abstützt. Die Innenkontur kann aber auch anderweitig vorgesehen sein, das heißt dass beispielsweise das Stützelement formschlüssig am Halter gehalten ist, seinerseits wiederum die Widerlagerfläche und die mindestens eine Seitenstützfläche für den Querträger bereitstellt.

Es ist möglich, dass die mindestens eine Seitenstützfläche zur Abstützung einer Außenseite des Querträgers vorgesehen ist. Es ist auch möglich, insbesondere auch in Kombination mit der vorgenannten Maßnahme, dass die mindestens eine Seitenstützfläche zur Abstützung an einer Innenkontur, insbesondere einer Durchtrittsöffnung oder Aufnahme, des Querträgers vorgesehen ist. An dieser Stelle sei bemerkt, dass die Kombination der vorgenannten Seitenstützflächen insbesondere deshalb möglich ist, weil mehrere Seitenstützflächen vorgesehen sein können. So kann z.B. eine Seitenstützfläche in eine Durchtrittsöffnung oder Aufnahme eintreten, während eine andere Seitenstützfläche den Querträger außenseitig stützt.

Die Zuganker-Spannachse ist beispielsweise rechtwinkelig zu der Widerlagerfläche.

Der Zuganker, beispielsweise ein Zuganker-Vorsprung, kann einstückig mit dem Halter sein. Der Zuganker oder ein Spannelement des Zugankers kann beispielsweise vor den Halter in Richtung des Querträgers vorstehen. Das Halteelement kann eine Einschrauböffnung oder Durchtrittsöffnung für den Zuganker aufweisen.

Bevorzugt umfasst die Zugankeranordnung mehrere Zuganker, insbesondere einen ersten Zuganker und einen zweiten Zuganker. Die Zuganker sind zweckmäßigerweise entlang einer Längsachse des Querträgers nebeneinander angeordnet.

Die Zuganker erstrecken sich beispielsweise exakt horizontal oder im Wesentlichen horizontal im am Kraftfahrzeug montierten Zustand der Anhängekupplung.

Die Anwendung der Erfindung ist auf vielfältige Weise möglich. Der Halter kann beispielsweise eine Steckaufnahme zum Anstecken oder Einstecken eines Steckvorsprungs oder Steckabschnitt des Kupplungselements aufweisen, sodass dieses beispielsweise lösbar vom Halter konfiguriert ist. Zur Verriegelung des Kupplungselements am Halter ist zweckmäßigerweise eine Verriegelungseinrichtung, z.B. mit einem Bolzen und Formschlusselementen oder dergleichen vorgesehen.

Bevorzugt ist es weiterhin, wenn das Kupplungselement anhand eines Lagers schwenkbar und/oder verschieblich am Halter gelagert ist, insbesondere zwischen einer zum Befestigen des Lastenträgers oder Anhängers geeigneten Gebrauchsstellung und einer insbesondere hinter einem Stoßfänger des Kraftfahrzeugs verborgenen Nichtgebrauchstellung.

Es ist aber auch möglich, dass das Kupplungselement fest, insbesondere einstückig, mit dem Halter verbunden ist, zum Beispiel verschraubt, verschweißt oder als ein Bauteil mit dem Halter hergestellt ist, insbesondere als ein Gussteil oder Schmiedeteil.

Nachfolgend werden Ausführungsbeispiele der Erfindung anhand der Zeichnung erläutert. Es zeigen:
- Figur 1: eine perspektivische Schrägansicht der Anhängekupplung mit einer Trägeranordnung mit einem Halter und einem Kupplungsarm,
- Figur 2: eine Explosionsdarstellung der Anhängekupplung gemäß Figur 1,
- Figur 3: die Komponenten der Anhängekupplung gemäß Figur 2, geschnitten etwa entlang einer Schnittlinie A-A in Figur 1,
- Figur 4: einen Schnitt durch die Anhängekupplung gemäß Figur 1, etwa entlang einer Schnittlinie A-A,

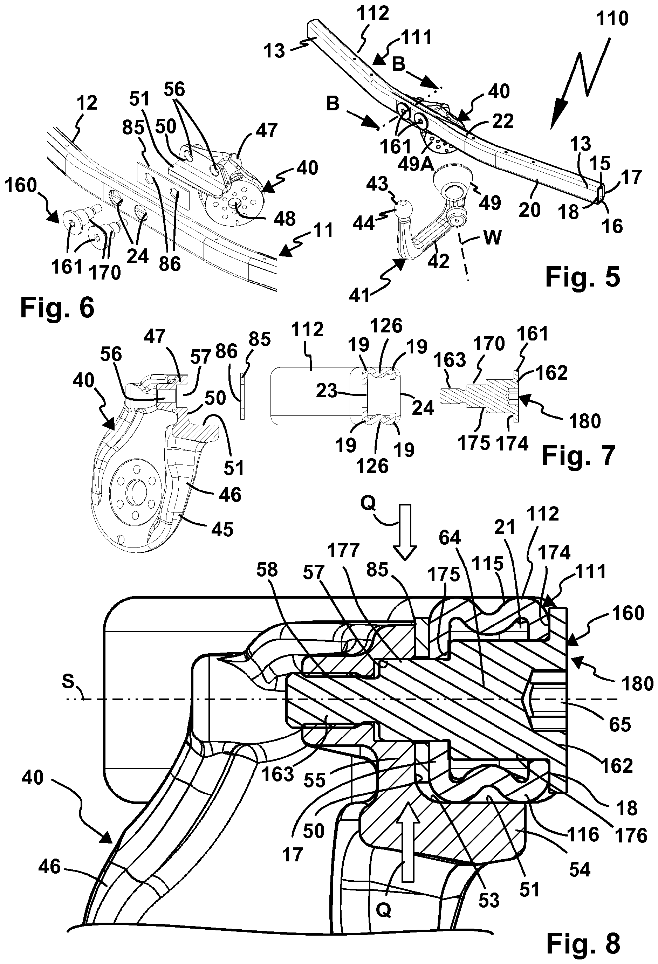

- Figur 5: eine weitere Anhängekupplung, die in
- Figur 6: in einer Explosionsdarstellung dargestellt ist,
- Figur 7: die Komponenten der Anhängekupplung gemäß Figur 6, geschnitten etwa entlang einer Schnittlinie B-B in Figur 5,
- Figur 8: einen Schnitt durch die Anhängekupplung gemäß Figur 5, etwa entlang einer Schnittlinie B-B,
- Figur 9: eine weitere Anhängekupplung, die in
- Figur 10: in einer Explosionsdarstellung dargestellt ist,
- Figur 11: die Komponenten der Anhängekupplung gemäß Figur 10, geschnitten etwa entlang einer Schnittlinie C-C in Figur 9,
- Figur 12: einen Schnitt durch die Anhängekupplung gemäß Figur 9, etwa entlang einer Schnittlinie C-C,

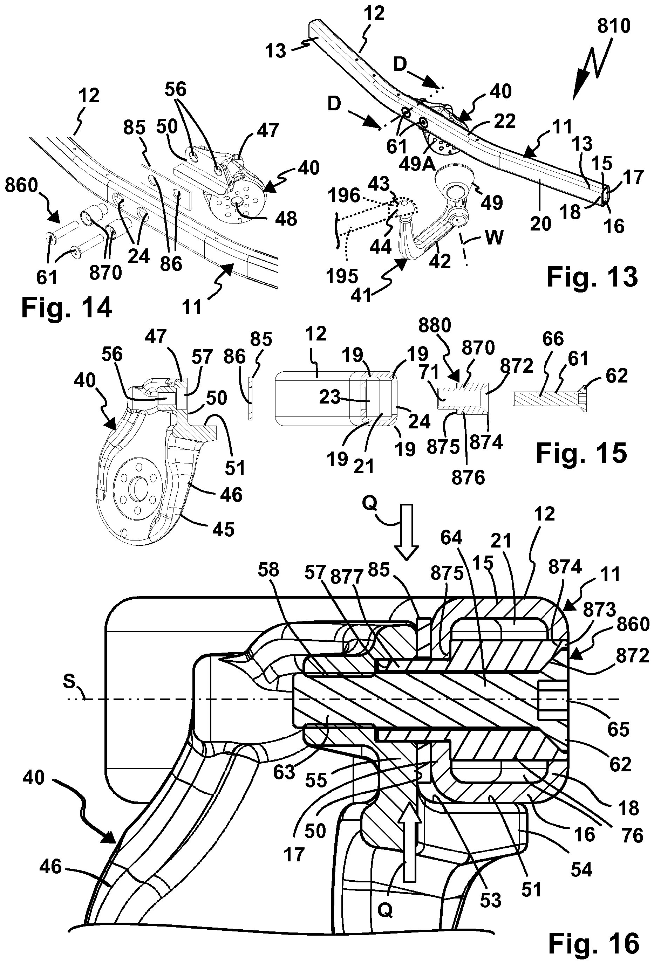

- Figur 13: eine weitere Anhängekupplung, die in
- Figur 14: in einer Explosionsdarstellung dargestellt ist,
- Figur 15: die Komponenten der Anhängekupplung gemäß Figur 14, geschnitten etwa entlang einer Schnittlinie D-D in Figur 13,
- Figur 16: einen Schnitt durch die Anhängekupplung gemäß Figur 13, etwa entlang einer Schnittlinie D-D,

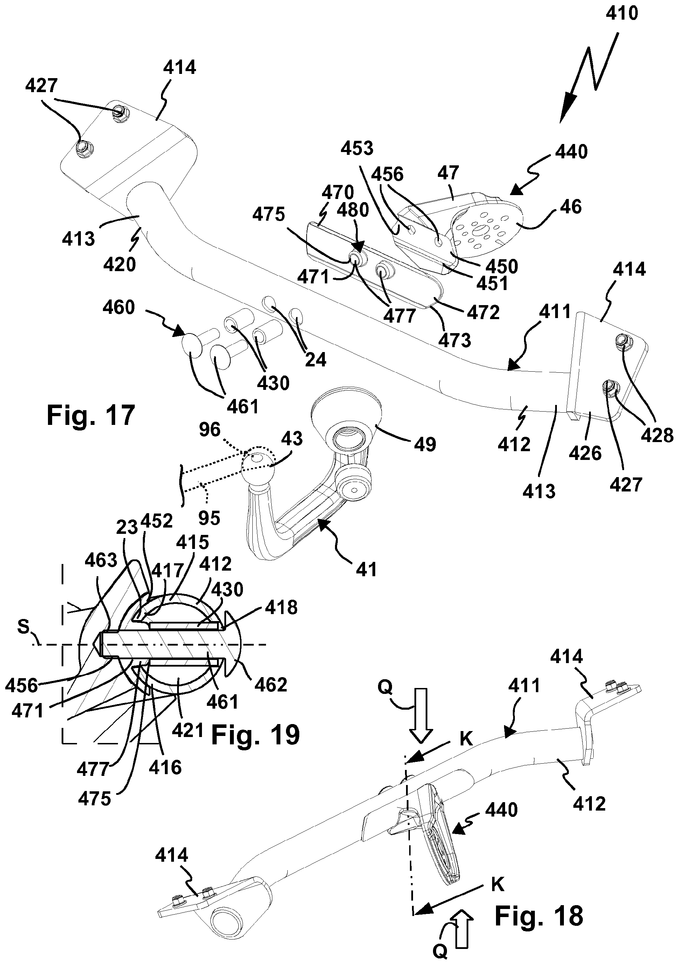

- Figur 17: eine Explosionsdarstellung einer weiteren Anhängekupplung mit einem Halter, welcher eine seitliche Seitenstützfläche sowie Stützvorsprünge an einem Stützelement aufweist,
- Figur 18: die Anhängekupplung gemäß Figur 17 im montierten Zustand, und
- Figur 19: einen Querschnitt durch die Anhängekupplung gemäß Figur 17 etwa entlang einer Schnittlinie K-K.

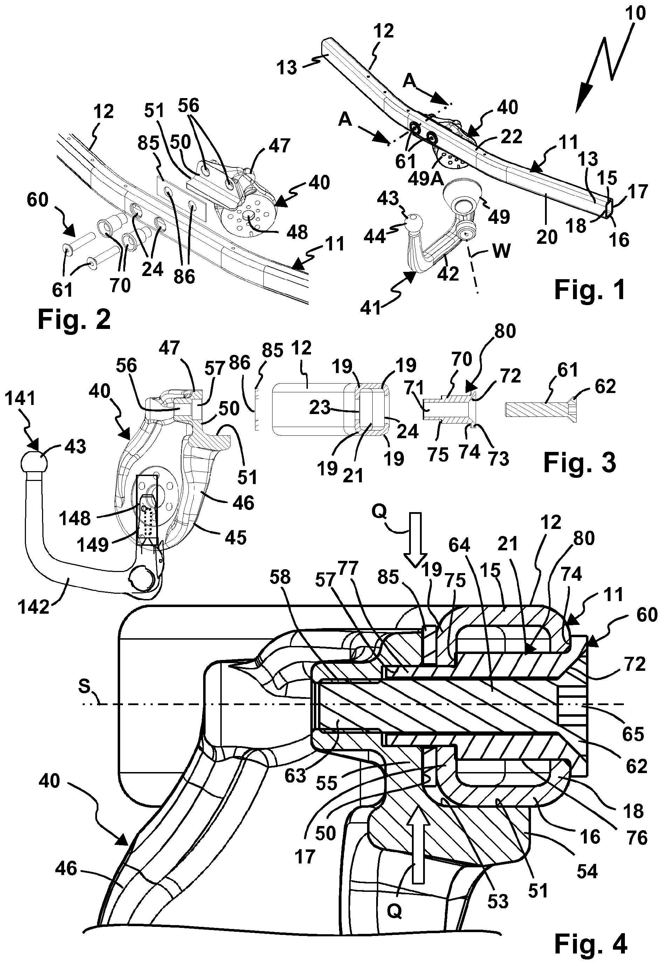

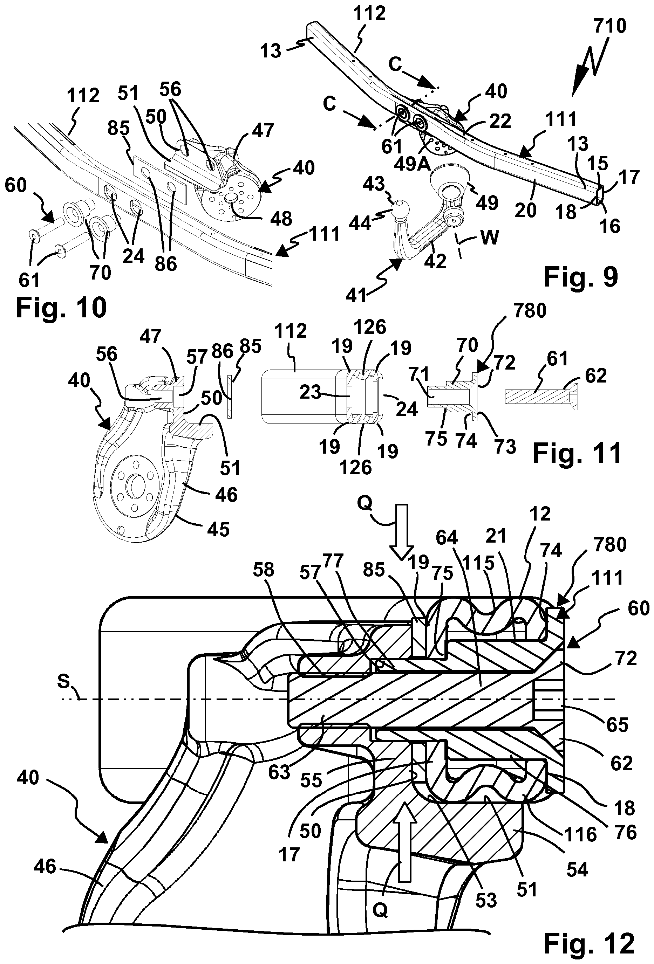

Eine Anhängekupplung 10 gemäß Figur 1 umfasst einen Querträger 11 einer Trägeranordnung 12. Der Querträger 11 ist beispielsweise an seinen Längsendbereichen 13 mit in Figur 9 schematisch dargestellten Seitenträgern 14 versehen, die an einer Karosserie 91 eines Kraftfahrzeugs 90 befestigt sind, beispielsweise verschraubt und/oder verschweißt und/oder verklebt. Der Querträger 12 erstreckt sich in Fahrzeugquerrichtung des Kraftfahrzeugs 90 beispielsweise hinter einem Stoßfänger 92, so dass er bei Gebrauch nicht sichtbar ist. Prinzipiell möglich wäre es, den Querträger 12 unmittelbar mit der Karosserie 91 zu verbinden, beispielsweise indem die Längsenden 13 unmittelbar mit der Karosserie 90 verschraubt, verschweißt oder dergleichen anderweitig verbunden sind.

Der Querträger 12 hat einen rechteckigen Querschnitt mit im am Kraftfahrzeug 90 montierten Zustand der Trägeranordnung 11 oberen und unteren Seitenwänden 15, 16, die durch eine vordere und hintere Seitenwand 17, 18 miteinander verbunden sind. Zwischen den Seitenwänden 15-18 sind Krümmungsabschnitte 19 vorgesehen, so dass das Profil des Querträgers 12 keine scharfen Kanten (was aber auch möglich wäre), sondern gerundete Kanten aufweist.

Der Querträger 12 ist als ein Profilteil 20 ausgebildet. Die Seitenwände 15-18 begrenzen einen Hohlraum 21.

An einem mittleren Abschnitt 22 des Querträgers 12 ist ein Halter 40 angeordnet, an welchem als ein Kupplungselement 41 ein Kupplungsarm 42 gehalten ist. An einem freien Endbereich des Kupplungsarmes 42 bzw. des Kupplungselementes 41 befindet sich ein Kuppelstück 43 zum Ankuppeln eines Lastenträgers oder wie in Figur 9 dargestellt, eines Anhängers 95. Der Anhänger 95 hat beispielsweise an seiner Deichsel eine sogenannte Zugkugelkupplung 96, die lösbar mit dem Kuppelstück 43, vorliegend einer Kupplungskugel 44 in an sich bekannter Weise verbindbar ist. In ähnlicher Weise könnte ein Lastenträger 195 am Kuppelstück 43 befestigt werden, beispielsweise anhand einer Klemmkupplung 196.

Das Kupplungselement 41 ist an einem Halteabschnitt 45 des Halters 40 angeordnet. Hier wäre eine feste Anordnung möglich, aber auch beispielsweise eine Steckverbindung mit Steckvorsprung und Steckaufnahme. Beispielsweise ist an einem anstelle des Kupplungselements 41 vorgesehenen Kupplungselement 141 ein Steckvorsprung 149 zum Einstecken in eine Steckaufnahme 148 am Halteabschnitt 45 vorgesehen. Die zugehörigen Verriegelungsmittel sind in der Zeichnung nicht dargestellt. Der Kupplungsarm 141 könnte auch einstückig mit dem Halteabschnitt 45 sein oder mit diesem beispielsweise durch eine Schraubverbindung oder Schweißverbindung verbunden sein.

Bei den Ausführungsbeispielen in der Zeichnung ist das Kupplungselement 41 um eine Schwenkachse W schwenkbar zwischen einer Gebrauchsstellung G und einer Nichtgebrauchsstellung N gelagert, in der er nicht zum Befestigen eines Anhängers oder eines Lastenträgers geeignet ist. Beispielsweise ist der Kupplungsarm 42 in der Nichtgebrauchsstellung N hinter dem Stoßfänger 92 verborgen, während er in der Gebrauchsstellung G vor den Stoßfänger mit dem Kuppelstück 43 vorsteht.

Der Halteabschnitt 45 umfasst einen Haltearm 46, der von einem Grundkörper 47 des Halters 40 absteht. Am Haltearm 46 ist beispielsweise eine Lageraufnahme 48 vorgesehen, in die beispielsweise ein Lagerbolzen fest oder drehbar gehalten ist, der in einen Schwenkabschnitt 49 des Kupplungselementes 41 eingreift. Von einer Verriegelungsanordnung zum Verriegeln des Kupplungselementes 41 bezüglich des Halters 40 in der Gebrauchsstellung G und der Nichtgebrauchsstellung N sind lediglich Formschlussaufnahmen 49A in der Zeichnung sichtbar.

Man kann sich vorstellen, dass die bei der Nutzung der Anhängekupplung 10 auftretenden Kräfte recht groß sind, d.h. auf den Halteabschnitt 45 des Halters 40 große Stützkräfte, Zugkräfte und Schubkräfte eines Lastenträgers bzw. Anhängers einwirken, die jedoch durch die nachfolgend erläuterten Befestigungsmaßnahmen des Halters 40 am Querträger 12 effektiv von dem Kupplungselement 41 auf die Trägeranordnung 11 und somit letztlich auf die Karosserie 91 des Kraftfahrzeugs 90 übertragen werden können. Die beim Fahrbetrieb auftretenden Kräfte werden von der Anhängekupplung 10 optimal aufgenommen und auf das Kraftfahrzeug 90 bzw. dessen Karosserie 91 übertragen.

Die nachfolgend erläuterten Befestigungskonzepte von Haltern an einem Querträger beziehen sich teilweise auf gleiche oder gleichartige Komponenten bei verschiedenen Ausführungsbeispielen, so dass insoweit gleiche oder gleichartige Bezugszeichen gewählt sind. Wenn Komponenten voneinander abweichen, sind weitgehend Bezugszeichen gewählt, die sich lediglich um "100" voneinander unterscheiden.

Der Halter 40 ist am Querträger 12 an einer Widerlagerfläche 50 abgestützt. Vor die Widerlagerfläche 50 steht eine Seitenstützfläche 51 vor. An der Seitenstützfläche 51 ist der Querträger 12 mit seiner unteren Seitenwand 16, an der Widerlagerfläche 50 mit seiner vorderen Seitenwand 17 abgestützt. Die Widerlagerfläche 50 und die Seitenstützfläche 51 sind also im gleichen Winkel zueinander angeordnet, wie die Außenseiten der Seitenwände 17, 18.

Mithin ist also der Querträger 12 in einer Aufnahme 53 des Halters 40 formschlüssig abgestützt und zwar nicht nur in einer Richtung, sondern in zueinander winkeligen Richtungen. Die Seitenstützfläche 51 ist beispielsweise an einem Stützschenkel 54 vorgesehen, der vor einen Schraubschenkel 55 winkelig vorsteht. Der Stützschenkel 54 und der Befestigungsschenkel 55 sind am Grundkörper 47 ausgebildet.

Der Befestigungsschenkel 55 dient zur Befestigung des Querträgers 12 anhand einer Zugankeranordnung 60. Die Zugankeranordnung 60 umfasst Zuganker 61, welche Durchtrittsöffnungen 24, 23 an den Seitenwänden 18, 17 durchdringen und in Schraubaufnahmen 56 am Halter 40 eingeschraubt sind. Die Schraubaufnahmen 56 befinden sich an der Widerlagerfläche 50. Die Zuganker 61 können also entlang ihrer Zuganker-Spannachse S in Richtung der Widerlagerfläche 50 geschraubt werden, wobei sie den Querträger 12 mit der Aufnahme 50 verspannen, nämlich in Richtung der Widerlagerfläche 50.

Die Zuganker 61 sind in Stützelemente 80 bildenden Stützhülsen 70 aufgenommen, die Durchtrittsöffnungen 71 für die Zuganker 61 aufweisen. Die Zuganker 61 weisen Köpfe 62 auf, die in Kopfaufnahmen 72 aufgenommen sind. Die Kopfaufnahmen 72 sind an Kopfabschnitten 73 der Stützhülsen 70 vorgesehen, die seitlich vor die Durchtrittsöffnungen 54 an der Seitenwand 18 vorstehen. Mithin stützen sich also die Kopfabschnitte 73 mit Stützflächen 74 an der Seitenwand 18 ab, so dass letztlich die Köpfe 62 der Zuganker 61 und die Kopfabschnitte 73 der Stützhülsen 70 die Seitenwand 18 in Richtung der Widerlagerfläche 50 und mithin in Richtung des Halters 40 spannen.

Somit ist jedenfalls der Querträger 12 anhand der Stützhülsen 70 und der Zuganker 61 in Richtung des Halters 40 belastet. Nun besteht dabei an sich ja die Gefahr, dass beispielsweise die Seitenwand 18 in Richtung der Seitenwand 17 verformt wird, so dass der Querträger 12 bzw. dessen Profil weniger belastbar ist. Dagegen leistet die Stützhülse 70 Widerstand. Zudem sorgt die Stützhülse 70 dafür, dass der Zuganker 61 auch die Seitenwand 17 in Richtung der Widerlagerfläche 50 belastet. Dazu ist eine Stufe zwischen einem Hülsenabschnitt 76 der Stützhülse 70 und einem Stützvorsprung 77 der Stützhülse 70 vorgesehen.

Der Stützvorsprung 77 durchdringt die Aufnahme 23 sowie eine Durchtrittsöffnung 86 eines Stützelementes 85 und dringt dann in eine Aufnahme 57 des Halters 50 ein. Der Stützvorsprung 77 ist an seinem Außenumfang sowohl umfangsseitig in der Durchtrittsöffnung 23 als auch in der Aufnahme 57 abgestützt. Weiterhin ist auch der Innenquerschnitt der Durchtrittsöffnung 86 des Stützelementes 85 an die Außenkontur des Stützvorsprunges 77 angepasst, so dieser formschlüssig in allen drei genannten Komponenten 57, 86, 23 aufgenommen ist. Somit kann der Stützvorsprung 77 zur Spannachse S quer wirkende Kräfte oder Querkräfte effektiv aufnehmen, ohne dass diese den Zuganker 61 an dessen Schraubabschnitt 63 belasten. Der Schraubabschnitt 63 ist an einem freien Endbereich des Zugankers 61, der vorliegend als Schraubbolzen ausgestaltet ist, vorgesehen. Der Schraubabschnitt 63 und der Kopf 62 sind an den Längsendbereichen eines Bolzenabschnittes 64 vorgesehen. Der Bolzenabschnitt 64 ist im Hülsenabschnitt 76 aufgenommen. Der Schraubabschnitt 63 steht vor den Hülsenabschnitt 76 vor und ist in einen Schraubabschnitt 58 der Schraubaufnahme 56 des Halters 40 eingeschraubt.

Bei einer Anhängekupplung 110 ist der Halter 40 anhand einer Zugankeranordnung 160 mit einem Querträger 112 einer Trägeranordnung 111 verbunden, der grundsätzlich dem Querträger 12 sehr ähnlich ist, jedoch am mittleren Abschnitt 22 eine Verformung aufgrund der Zugankeranordnung 160 erfährt, die noch beschrieben wird.

Die Zugankeranordnung 160 umfasst Zuganker 161, beispielsweise Schraubbolzen 166, die als Stufenbolzen ausgestaltet sind. Die Zuganker 161 weisen Köpfe 162 auf, die sich an der Außenseite der Seitenwand 18 abstützen. Bolzenabschnitte 164 der Zuganker 161 dringen in den Hohlraum 21 zwischen den Seitenwänden 17, 18 ein. Dabei stützt sich eine Stützfläche 74 am Kopfabschnitt oder Kopf 162 außenseitig an der Seitenwand 18 ab und belastet diese in Richtung der dem Halter 40 zugewandten Seitenwand 17. Dadurch werden die Seitenwände 15, 16, die sich zwischen den Seitenwänden 17, 18 erstrecken, verformt. Es bildet sich ein Seitenwandabschnitt 115 und ein Seitenwandabschnitt 116 der oberen und unteren Seitenwand 15, 16 aus, der eine Verformung 126 nach innen in Richtung des Hohlraumes 21 ausbildet. Dadurch ist der mittlere Abschnitt 22 zusätzlich noch versteift.

Vor den Bolzenabschnitt 164 steht ein Stützvorsprung 177 vor, der in der bereits erläuterten Aufnahme 57 des Halters 40 aufgenommen ist. Der Stützvorsprung 177 durchdringt die Durchtrittsöffnung 23 an der Seitenwand 17, die Durchtrittsöffnung 86 des Stützelementes 85 und dringt schließlich in die Aufnahme 77 ein. Somit kann auch der Stützvorsprung 77 quer zur Spannachse S auftretende Querkräfte Q aufnehmen.

Zwischen dem Stützvorsprung 177 und dem Bolzenabschnitt 164 ist eine Stufe 175 vorgesehen. An der Stufe 175 befindet sich eine Stützfläche 178, welche sich an der Innenseite bzw. Innenfläche der Seitenwand 17 (also der dem Hohlraum 21 zugewandten Fläche) neben der Durchtrittsöffnung 23 abstützt. Dadurch wird die Seitenwand 17 in Richtung der Widerlagerfläche 50 gespannt bzw. belastet. Das zwischen der Widerlagerfläche 50 und der Seitenwand 17 liegende Stützelement 85 überträgt die Spannkraft des Zugankers 161, die auf den Querträger 112 wirkt, auf die Widerlagerfläche 50.

Mit dem Seitenwandabschnitt 116 liegt der Querträger 112 auf der Seitenstützfläche 51 auf. Somit ist der Halter 40 einerseits durch den Stützvorsprung 77, anderseits durch die aufeinander wirkenden Flächen der Seitenwand 16 und der Seitenstützfläche 51 quer zur Spannachse S abgestützt.

Die Montage gestaltet sich im Vergleich zur Anhängekupplung 10 insoweit leichter, als der Zuganker 161 gleichzeitig ein Stützelement bildet, d.h., dass keine zusätzliche Stützhülse 70 zu montieren ist. Bevorzugt weist der Zuganker 161 dementsprechend einen größeren, belastbaren Querschnitt zur Spannachse S auf. Insbesondere hat der Stützvorsprung 177 einen größeren Querschnitt als der Schraubabschnitt 163.

Bei einer Anhängekupplung 710 ist dargestellt, dass das Befestigungskonzept mit einer Stützhülse und einem daran angeordneten Stützvorsprung sowie einem davon separaten Zuganker oder Schraubbolzen auch bei einem sozusagen quer mittig verformten Seitenträger möglich ist.

Beispielsweise ist der Halter 40 anhand der bereits erläuterten Zugankeranordnung 60 und der Stützhülsen 70 am Halter 40 befestigt. Man erkennt aus der Zeichnung, dass auch in diesem Fall der Kopfabschnitt 73 und insbesondere die Stützfläche 74 dafür sorgen können, dass die Seitenwand 18 in Richtung der Seitenwand 17 beim Verspannen der Zugankeranordnung 60 mit dem Halter 40 verformt werden kann, so dass sich die verformten Seitenwandabschnitte 115, 116 und die Verformung 126 an diesen Seitenwandabschnitten ausbilden.

Bei einer Anhängekupplung 810 ist der Halter 40 anhand einer Zugankeranordnung 860 mit dem Querträger 12 verbunden. Bei der Zugankeranordnung 60 sowie der zugehörigen Stütztechnik anhand einer Stützhülse 870 wird die Seitenwand 18, also die Seitenwand, die vom Halter 40 abgewandt ist, nicht in Richtung der dem Halter 40 näheren Seitenwand 17 belastet.

Die Stützhülse 870 nimmt die bereits erläuterten Schraubbolzen 66 oder Zuganker 61 auf. Deren Köpfe 61 stützen sich in Kopfaufnahmen 872 der Stützhülsen 870 ab. Die Stützhülsen 870 weisen zylindrische Kopfabschnitte 873 auf, die in die Durchtrittsöffnungen 24 eintauchen und vorzugsweise nicht nach außen vor die Seitenwand 18, d.h. entgegengesetzt zum Hohlraum 21, vor den Querträger 12 vorstehen. Die Stützhülsen 870 stützen sich mit ihrem Außenumfang im Bereich des Kopfabschnittes 873, nämlich mit einer Außenkontur 874, an einer Innenkontur einer jeweiligen Durchtrittsöffnung 24 ab. Somit sind auf die Stützhülsen 870 quer zur Spannachse S wirkende Querkräfte Q an der Seitenwand 18 und somit am Querträger 12 durch die Stützhülse 870 abgestützt.

Hülsenabschnitte 876 der Stützhülsen 870 sind im Hohlraum oder Innenraum 21 des Querträgers 12 aufgenommen. An der Stirnseite, also entgegengesetzt zum Kopfabschnitt 873, steht ein Stützvorsprung 877 vor den Hülsenabschnitt 876 vor. Der Stützvorsprung 877 dringt in die Aufnahme 57 des Halters 40 ein und stützt sich dort quer zur Spannachse S formschlüssig ab. Die Stufe 874 wiederum belastet in der bereits erläuterten Weise, d.h. ähnlich wie die Stufe 75, die Seitenwand 17 in Richtung der Widerlagerfläche 50, wenn der Schraubbolzen 66 oder der Zuganker 61 in Richtung der Spannachse S mit dem Halter 40 verbunden wird. Beispielsweise wird wie erläutert der Schraubabschnitt 63 in die Schraubaufnahme 56 eingeschraubt. Sandwichartig zwischen der Seitenwand 17 und der Widerlagerfläche 50 befindet sich das Stützelement 85, das eine Plattengestalt aufweist.

Bei einer Anhängekupplung 410 ist ein Halter 440 anhand einer Zugankeranordnung 460 mit einem Querträger 412 einer Trägeranordnung 411 verbunden.

Der Querträger 412 hat einen runden, insbesondere kreisrunden Querschnitt, ist also anders als die Querträger 12 nicht polygonal. Eine Seitenwand des Querträgers 12 hat beispielsweise obere, untere sowie vordere und hintere Seitenwandabschnitte (in der Gebrauchslage bzw. im am Kraftfahrzeug 90 montierten Zustand der Trägeranordnung 412), wobei nachfolgend lediglich eine Seitenwand 417, die am Halter 440 befestigt ist und sich dort unmittelbar abstützt, im Detail erläutert ist.

Der Halter 440 hat den bekannten Grundkörper 47, von dem ein Haltearm 76 zum Halten und insbesondere schwenkbaren Lagern des bereits erläuterten Kupplungselementes 41 vorgesehen ist. An dem Grundkörper 47 ist eine Aufnahme 453 für den Querträger 412 vorgesehen. Die Aufnahme 453 weist eine Widerlagerfläche 450 sowie eine Seitenstützfläche 451 auf, die vor die Widerlagerfläche 450 in Richtung der Spannachsen S der Zuganker 461 der Zugankeranordnung 460 vorsteht.

An der Widerlagerfläche 450 sind Schraubaufnahmen 456 für die Zuganker 461 vorgesehen, die mit Schraubabschnitten 463 in die Schraubaufnahmen 456 eingeschraubt sind.

Die Schraubbolzen oder Zuganker 461 durchdringen Durchtrittsöffnungen 24, 23 des Querträgers 12 und sind in die Schraubaufnahmen 456 eingeschraubt, wodurch sie den Halter 440 entlang von Spannachsen S mit dem Querträger 412 verspannen.

Zudem durchdringen die Zuganker 461 Stützhülsen 430, die im Innenraum oder Hohlraum 421 des Querträgers 412 angeordnet sind. Die Stützhülsen 430 dienen insbesondere dazu, der Kopf 462 einen dem Seitenwandabschnitt 417 bzw. dem Halter 440 gegenüberliegenden Seitenwandabschnitt 418 des Querträgers 412 bzw. Profilteils 420 nicht in Richtung des Halters 440 verformt oder nur in einem vorbestimmten Maß.

Weiterhin sind die Zuganker 461 quer zur Spannachse S abgestützt, nämlich durch die Seitenstützfläche 451, zumindest mittelbar durch die Seitenstützfläche 461.

In der Aufnahme 453 und somit zwischen dem Halter 440 und dem Querträger 412 ist ein Stützelement 480 in Gestalt einer Stützplatte 470 angeordnet. Die Stützplatte 470 hat eine Innenkontur 472, die der Außenkontur des Querträgers 12 angepasst ist. Eine Außenkontur 473 des Stützelementes 480 wiederum ist an eine Innenkontur der Aufnahme 453, mithin also an eine Kontur, die durch die Widerlagerfläche 450 und die Seitenstützfläche 451 definiert ist, angepasst. Somit ist das Stützelement 480 in der Aufnahme 453 formschlüssig aufgenommen.

Die Innenkontur 472 ermöglicht weiterhin eine formschlüssige Abstützung des Querträgers 412 am Stützelement 480, nämlich entlang der Spannachse S, aber auch quer dazu. Beispielsweise ist die Seitenstützfläche 451 sozusagen durch das Stützelement 480 in Richtung des Querträgers 412 fortgesetzt, so dass sich ein unterer Seitenwandabschnitt 416 des Querträgers 412 quer zur Spannachse S an dem Stützelement 480 und letztlich an der Seitenstützfläche 451 abstützt. Ein der Seitenstützfläche 451 gegenüberliegender Stützabschnitt 452 des Stützelementes 480 sorgt dafür, dass auch ein oberer Seitenwandabschnitt 415 des Querträgers 12 am Stützelement 480 quer zur Spannachse S abgestützt ist.

Das Stützelement 480 erfüllt aber zudem noch eine Führungs- und Sicherungsfunktion für den Schraubbolzen oder Zuganker 461. Der Zuganker 461 durchdringt nämlich eine Durchtrittsöffnung 471 des Stützelementes 480 und steht mit seinem Schraubabschnitt 463 vor das Stützelement 480 vor. Die Durchtrittsöffnung 471 ist an einem Stützvorsprung 477 vorgesehen, der in die Aufnahme 423 des Querträgers 412 eindringt und somit den Zuganker 61 quer zur Spannachse S stützt. Quer zur Spannachse S auf die Kombination von Halter 440 und Querträger 412 einwirkende Querkräfte werden also vom Stützvorsprung 477 effektiv abgefangen.

An einer Stirnseite, d.h. vom Halter 440 abgewandt oder der Widerlagerfläche 450 abgewandt, des Stützvorsprunges 477 stützt sich eine Stützhülse 430 ab, die ebenfalls vom Schraubbolzen oder Zuganker 461 durchdrungen ist. Der Kopf 462 belastet somit die Stützhülse 430 entlang der Spannachse S gegen die Stützfläche 475, was zur Verspannung des Stützelementes 480 mit der Aufnahme 453 oder dem Halter 440 beiträgt.

An Längsendbereichen 413 des Querträgers 412 sind Befestigungsmittel zur Befestigung der Trägeranordnung 411 am Kraftfahrzeug 90 vorgesehen, welches im Zusammenhang mit der Anhängekupplung 410 nicht dargestellt ist. Beispielsweise sind Seitenträger 414 oder Befestigungsschenkel 414 vorgesehen, welche plattenartige Trägerelemente 426 aufweisen. An den Trägerelementen 426 sind Schrauböffnungen 428 vorgesehen, durch die Schrauben 427 oder dergleichen andere Schraubmittel zur Verschraubung der Trägeranordnung 411 mit dem Kraftfahrzeug 90 vorgesehen sind. Mit den Schrauben 428 kann die Trägeranordnung 411 beispielsweise an ein heckseitiges Karosserieblech oder an Längsträger der Karosserie 91 angeschraubt werden.

Die Stützhülsen 430 sind in Bezug auf den Seitenwandabschnitt 418 zweckmäßigerweise unterbündig, so dass der Kopf 462 den Seitenwandabschnitt 418 in geringem Maße in Richtung des Seitenwandabschnittes 417 verformen kann.

## Patentansprüche

1. Anhängekupplung für ein Kraftfahrzeug mit einer Trägeranordnung (11), die einen zur Anordnung an einem Heck eines Kraftfahrzeugs vorgesehenen und zumindest abschnittsweise als Profilteil (20) ausgestalteten Querträger (12) und einen an dem Querträger (12) gehaltenen Halter (40) zum Halten eines Kupplungselements (41), insbesondere eines Kupplungsarms (42), der Anhängekupplung (10) aufweist, wobei das Kupplungselement (41) zur Befestigung eines Anhängers (95) oder eines Lastenträgers (195) vorgesehen ist, wobei der Halter (40) anhand eines Zugankers (61) einer Zugankeranordnung (60), insbesondere einer Schraube, mit dem Querträger (12) verbunden ist, wobei der Zuganker (61) den Querträger (12) entlang seiner Zuganker-Spannachse (S) durchdringt und eine von der Zuganker-Spannachse (S) oder einer zu der Zuganker-Spannachse (S) parallelen Achse durchsetzte Widerlagerfläche (50) des Halters (40) gegen eine Seitenwand (17) des Querträgers (12) spannt, die eine Durchtrittsöffnung (23) für den Zuganker (61) aufweist, wobei die Zugankeranordnung (60) ein Stützelement (80) mit einer Stützfläche (74) aufweist, **dadurch gekennzeichnet, dass** das Stützelement (80) einen vor die Stützfläche (74) in Richtung der Zuganker-Spannachse (S) vorstehenden Stützvorsprung (77) aufweist, der in die Durchtrittsöffnung (23) der Seitenwand (17) eindringt, wobei sich die Stützfläche (74) des Stützelements (80) mit mindestens einer Kraftkomponente in Richtung der Spannachse (S) an der Seitenwand (17) des Querträgers (12) neben der Durchtrittsöffnung (23) und der Stützvorsprung (77) mit mindestens einer Kraftkomponente quer zu der Spannachse (S) in der Durchtrittsöffnung (23) abstützt.

2. Anhängekupplung nach Anspruch 1, **dadurch gekennzeichnet, dass** die Stützfläche (74) des Stützelements (80) der Widerlagerfläche (50) des Halters (40) gegenüber liegt, sodass die Seitenwand (17) des Querträgers (12) zwischen die Stützfläche (74) und die Widerlagerfläche (50) sandwichartig geklemmt ist, und/oder dass das Stützelement (80) ein von einem Zuganker (61), insbesondere Schraubbolzen, und/oder von dem Halter (40) separates Bauteil ist und/oder dass das Stützelement (80) in einem Innenraum des Profilteils (20) oder außerhalb des Profilteils (20) angeordnet ist.

3. Anhängekupplung nach Anspruch 1 oder 2, **dadurch gekennzeichnet, dass** der Stützvorsprung (77) eine Aufnahme oder Durchtrittsöffnung (71) aufweist, in die der Zuganker (61) eindringt oder die der Zuganker durchdringt, und/oder dass das Stützelement (80) plattenartig und/oder konturgleich mit der Seitenwand (17) des Querträgers (12) ist.

4. Anhängekupplung nach einem der vorhergehenden Ansprüche, **dadurch gekennzeichnet, dass** das Stützelement (80) sich flächig an dem Querträger (12) abstützt.

5. Anhängekupplung nach einem der vorhergehenden Ansprüche, **dadurch gekennzeichnet, dass** das Stützelement (80) mindestens zwei Stützvorsprünge aufweist, die jeweils in eine Durchtrittsöffnung (23) der Seitenwand (17) des Querträgers (12) eindringen.

6. Anhängekupplung nach einem der vorhergehenden Ansprüche, **dadurch gekennzeichnet, dass** das Stützelement (80) einen Kopf oder Kopfabschnitt (73) aufweist, der in einer zweiten Durchtrittsöffnung (24) einer zweiten Seitenwand (18) aufgenommen ist, die der eine erste Seitenwand bildenden Seitenwand (17) des Querträgers (12) gegenüberliegt, welche den Stützvorsprung (77) aufnimmt.

7. Anhängekupplung nach Anspruch 6, **dadurch gekennzeichnet, dass** der Kopf (73) sich quer zu der Spannachse (S) an mindestens einer Innenkontur der zweiten Durchtrittsöffnung (24) abstützt und/oder seitlich vor die Durchtrittsöffnung (24) der zweiten Seitenwand vorsteht und/oder dass der Kopf (73) die zweite Seitenwand in Richtung der ersten Seitenwand (17) oder des Halters (40) belastet.

8. Anhängekupplung nach einem der vorhergehenden Ansprüche, **dadurch gekennzeichnet, dass** mindestens eine die erste und die zweite Seitenwand (18) verbindende Seitenwand (15, 16), insbesondere eine Paarung einander gegenüberliegender Seitenwände, durch den Zuganker (61), insbesondere dessen Kopf (62), quer zu der Spannachse (S) verformt ist.

9. Anhängekupplung nach einem der vorhergehenden Ansprüche, **dadurch gekennzeichnet, dass** die Stützfläche (74) an einem Schraubbolzen vorgesehen ist, der mit einem Schraubabschnitt (63) zu dem Halter (40) vorsteht, insbesondere in eine Schraubaufnahme des Halters (40) eingeschraubt ist oder eine Durchtrittsöffnung des Halters (40) durchdringt und mit einer Mutter gesichert ist, wobei die Stützfläche (74) in der Art einer Stufe seitlich vor den Schraubabschnitt (63) vorsteht.

10. Anhängekupplung nach einem der vorhergehenden Ansprüche, **dadurch gekennzeichnet, dass** der Stützvorsprung (77) durch den Schraubabschnitt (63) oder einen zwischen dem Schraubabschnitt (63) und der Stützfläche (74) vorgesehenen Bolzenabschnitt (64) gebildet ist.

11. Anhängekupplung nach einem der vorhergehenden Ansprüche, **dadurch gekennzeichnet, dass** die Stützfläche (74) an einer Stützhülse (70) vorgesehen ist, die eine Durchtrittsöffnung (71) für den Zuganker (61) aufweist und vom Zuganker (61) durchsetzt ist.

12. Anhängekupplung nach Anspruch 11, **dadurch gekennzeichnet, dass** die Stützhülse (70) einen Kopfabschnitt (73) aufweist, der eine Kopfaufnahme (72) aufweist, in der ein Kopf (62) des Zugankers (61), insbesondere ein Schraubenkopf, aufgenommen ist, wobei der Kopfabschnitt (73), insbesondere die Kopfaufnahme (72), seitlich vor die zweite Durchtrittsöffnung (24) vorsteht, und/oder dass die Stützhülse (70) nicht vor eine von der ersten Seitenwand (17) abgewandte Außenseite der zweiten Seitenwand (18) vorsteht und/oder dass die Stützhülse (70) mit der Außenseite fluchtet und/oder dass die Stützhülse (70) hinter die Außenseite zurück steht oder relativ zu der Außenseite unterbündig ist.

13. Anhängekupplung nach einem der vorhergehenden Ansprüche, **dadurch gekennzeichnet, dass** mindestens ein Zuganker (61) oder alle Zuganker (61) der Zugankeranordnung (60) nicht vor eine Seitenwand des Querträgers (12) vorstehen, die der den Stützvorsprung (77) aufnehmenden Seitenwand (17) gegenüberliegt, und/oder dass an dem Halter (40) eine Aufnahme für den Stützvorsprung (77) vorgesehen ist, in die der Stützvorsprung (77) eindringt, wobei vorteilhaft vorgesehen ist, dass der Stützvorsprung (77) in der Aufnahme quer zu der Spannachse (S), insbesondere an seinem gesamten Außenumfang, abgestützt ist.

14. Anhängekupplung nach einem der vorhergehenden Ansprüche, **dadurch gekennzeichnet, dass** der Halter (40) mindestens eine Seitenstützfläche aufweist, die vor die Widerlagerfläche (50) neben dem Zuganker (61) vorsteht und an dem Querträger (12) anliegt, so dass der Halter (40) an dem Querträger (12) seitlich neben dem Zuganker (61) bezüglich einer quer zu der Zuganker-Spannachse (S) des Zugankers (61) wirkenden Kraft abgestützt ist.

15. Anhängekupplung nach Anspruch 14, **dadurch gekennzeichnet, dass** die mindestens eine Seitenstützfläche (51) eine gerundete Seitenstützfläche (51) ist oder eine solche umfasst und/oder dass die mindestens eine Seitenstützfläche (51) und die Widerlagerfläche (50) kontinuierlich und/oder ohne eine zwischen der Seitenstützfläche und der Widerlagerfläche verlaufende Kante ineinander übergehen und/oder eine insbesondere kreisförmige Krümmungskontur ausbilden und/oder dass die mindestens eine Seitenstützfläche (51) und die Widerlagerfläche (50) einen L-förmigen Querschnitt des Halters (40) bilden oder L-förmig angeordnet sind und/oder dass der Halter (40) ausschließlich anhand der mindestens einen Seitenstützfläche (51) und der Widerlagerfläche (50) an dem Querträger (12) abgestützt ist.

## Claims

1. Trailer coupling for a motor vehicle with a support assembly (11) which has a cross-member (12) provided for mounting on a rear end of a motor vehicle and designed at least in part as a profile section (20), and a holder (40) fitted to the cross-member (12) for holding a coupling element (41), in particular a coupling arm (42) of the trailer coupling (10), wherein the coupling element (41) is provided for attaching a trailer (95) or a load carrier (195), wherein the holder (40) is connected to the cross-member (12) with the aid of a tie rod (61) of a tie rod assembly (60), in particular a screw, wherein the tie rod (61) penetrates the cross-member (12) and clamps an abutment surface (50) of the holder (40), through which passes the tie rod clamping axis (S) or an axis parallel to the tie rod clamping axis (S), against a side wall (17) of the cross-member (12) which has a through opening (23) for the tie rod (61), wherein the tie rod assembly (60) has a support element (80) with a support surface (74), **characterised in that** the support element (80) has a support projection (77) protruding from the support surface (74) towards the tie rod clamping axis (S) and penetrating the through opening (23) of the side wall (17), wherein the support surface (74) of the support element (80) rests with at least one force component in the through opening (23) in the direction of the clamping axis (S) on the side wall (17) of the cross-member (12) next to the through opening (23) and the support projection (77) with at least one force component transversely to the clamping axis (S).

2. Trailer coupling according to claim 1, **characterised in that** the support surface (74) of the support element (80) lies opposite the abutment surface (50) of the holder (40), so that the side wall (17) of the cross-member (12) is clamped sandwich-like between the support surface (74) and the abutment surface (50), and/or that the support element (80) is a separate component from a tie rod (61), in particular a threaded bolt and/or from the holder (40), and/or that the support element (80) is provided in an interior of the profile section (20) or outside the profile section (20).

3. Trailer coupling according to claim 1 or 2, **characterised in that** the support projection (77) has a location or through opening (71) in which the tie rod (61) penetrates or which penetrates the tie rod, and/or that the support element (80) is plate-like and/or identical in contour with the side wall (17) of the cross-member (12).

4. Trailer coupling according to any of the preceding claims, **characterised in that** the support element (80) rests flat against the cross-member (12).

5. Trailer coupling according to any of the preceding claims, **characterised in that** the support element (80) has at least two support projections, each penetrating a through opening (23) of the side wall (17) of the cross-member (12).

6. Trailer coupling according to any of the preceding claims, **characterised in that** the support element (80) has a head or head section (73) which is held in a second through opening (24) of a second side wall (18) which lies opposite the side wall (17) of the cross-member (12) forming a first side wall, which holds the support projection (77).

7. Trailer coupling according to claim 6, **characterised in that** the head (73) rests, transversely to the clamping axis (S), on at least one inside contour of the second through opening (24) and/or protrudes sideways from the through opening (24) of the second side wall and/or that the head (73) biases the second side wall towards the first side wall (17) or the holder (40).

8. Trailer coupling according to any of the preceding claims, **characterised in that** at least one side wall (15, 16) connecting the first and second side wall (18), in particular a pairing of opposite side walls, is deformed by the tie rod (61), in particular its head (62), transversely to the clamping axis (S).

9. Trailer coupling according to any of the preceding claims, **characterised in that** the support surface (74) is provided on a threaded bolt which protrudes with a screw section (63) from the holder (40), in particular is screwed into a screw socket of the holder (40) or penetrates a through opening of the holder (40) and is secured by a nut, wherein the support surface (74) protrudes sideways from the screw section (63) in the manner of a step.

10. Trailer coupling according to any of the preceding claims, **characterised in that** the support projection (77) is formed by the screw section (63) or a bolt section (64) provided between the screw section (63) and the support surface (74).

11. Trailer coupling according to any of the preceding claims, **characterised in that** the support surface (74) is provided on a support sleeve (70) which has a through opening (71) for the tie rod (61) and through which the tie rod (61) passes.

12. Trailer coupling according to claim 11, **characterised in that** the support sleeve (70) has a head section (73) which has a head location (72) in which is held a head (62) of the tie rod (61), in particular a screw head, wherein the head section (73), in particular the head location (72), protrudes sideways from the second through opening (24), and/or that the support sleeve (70) does not protrude from an outside of the second side wall (18) facing away from the first side wall (17), and/or that the support sleeve (70) is flush with the outside and/or that the support sleeve (70) is set back behind the outside or is recessed relative to the outside.

13. Trailer coupling according to any of the preceding claims, **characterised in that** the tie rod or tie rods (61) or all tie rods (61) of the tie rod assembly (60) do not protrude from a side wall of the cross-member (12) which lies opposite the side wall (17) holding the support projection (77) and/or that there is provided on the holder (40) a location for the support projection (77) into which the support projection (77) penetrates, wherein it is advantageously provided that the support projection (77) is supported in the location transversely to the clamping axis (S), in particular on its entire outer periphery.

14. Trailer coupling according to any of the preceding claims, **characterised in that** the holder (40) has at least one side support face, which protrudes from the abutment surface (50) next to the tie rod (61) and fits up against the cross-member (12), so that the holder (40) is supported on the cross-member (12) at the side next to the tie rod (61), in respect of a force acting transversely to the tie rod clamping axis (S) of the tie rod (61).

15. Trailer coupling according to claim 14, **characterised in that** the side support face or faces (51) is or are a rounded side support face (51) or includes such and/or that the side support face or faces (51) and the abutment surface (50) merge into one another continuously and/or without an edge running between the side support face and the abutment surface and/or form a curved contour, in particular circular, and/or that the side support face or faces (51) and the abutment surface (50) form an L-shaped cross-section of the holder (40) or are arranged in an L-shape and/or that the holder (40) is supported on the cross-member (12) solely with the aid of the side support face or faces (51) and the abutment surface (50).

## Revendications

1. Attelage de remorque pour un véhicule automobile avec un ensemble de support (11), qui présente une traverse (12) prévue pour être agencée au niveau d'un hayon d'un véhicule automobile et configurée au moins par endroits en tant que partie profilée (20) et un support (40) maintenu au niveau de la traverse (12), servant à maintenir un élément d'attelage (41), en particulier un bras d'attelage (42), de l'attelage de remorque (10), l'élément d'attelage (41) étant prévu pour fixer une remorque (95) ou un porte-charge (195), le support (40) étant relié à la traverse (12) à l'aide d'un tirant (61) d'un ensemble tirant (60), en particulier d'une vis, le tirant (61) traversant la traverse (12) dans la direction de l'axe de serrage (S) du tirant et serrant une surface de butée (50) du support (40), traversée par l'axe de serrage (S) du tirant ou par un axe parallèle par rapport à l'axe de serrage (S) du tirant, contre une paroi latérale (17) de la traverse (12), qui présente une ouverture de passage (23) pour le tirant (61), l'ensemble tirant (60) présentant un élément d'appui (80) avec une surface d'appui (74), **caractérisé en ce que** l'élément d'appui (80) présente un prolongement (77) faisant saillie devant la surface d'appui (74) en direction de l'axe de serrage (S) du tirant (S), qui entre dans l'ouverture de passage (23) de la paroi latérale (17), la surface d'appui (74) de l'élément d'appui (80) prenant appui avec au moins une composante de force en direction de l'axe de serrage (S) au niveau de la paroi latérale (17) de la traverse (12) à côté de l'ouverture de passage (23) et le prolongement (77) prenant appui avec au moins une composante de force de manière transversale par rapport à l'axe de serrage (S) dans l'ouverture de passage (23).

2. Attelage de remorque selon la revendication 1, **caractérisé en ce que** la surface d'appui (74) de l'élément d'appui (80) fait face à la surface de butée (50) du support (40) de telle sorte que la paroi latérale (17) de la traverse (12) est prise en sandwich entre la surface d'appui (74) et la surface de butée (50), et/ou que l'élément d'appui (80) est un composant distinct du tirant (61), en particulier d'un boulon de vissage, et/ou du support (40), et/ou que l'élément d'appui (80) est disposé dans un espace intérieur de la partie profilée (20) ou à l'extérieur de la partie profilée (20).

3. Attelage de remorque selon la revendication 1 ou 2, **caractérisé en ce que** le prolongement (77) présente un logement ou une ouverture de passage (71), dans laquelle le tirant (61) entre ou que le tirant traverse, et/ou que l'élément d'appui (80) est sous forme d'une plaque et/ou présente un contour identique à la paroi latérale (17) de la traverse (12).

4. Attelage de remorque selon l'une quelconque des revendications précédentes, **caractérisé en ce que** l'élément d'appui (80) prend appui à plat sur la traverse (12).

5. Attelage de remorque selon l'une quelconque des revendications précédentes, **caractérisé en ce que** l'élément d'appui (80) présente au moins deux prolongements (77), qui entrent respectivement dans une ouverture de passage (23) de la paroi latérale (17) de la traverse (12).

6. Attelage de remorque selon l'une quelconque des revendications précédentes, **caractérisé en ce que** l'élément d'appui (80) présente une tête ou une section de tête (73), qui est logée dans une deuxième ouverture de passage (24) d'une deuxième paroi latérale (18), qui fait face à la paroi latérale (17), formant une première paroi latérale, de la traverse (12), laquelle reçoit le prolongement (77).

7. Attelage de remorque selon la revendication 6, **caractérisé en ce que** la tête (73) prend appui au niveau d'au moins un contour intérieur de la deuxième ouverture de passage (24) de manière transversale par rapport à l'axe de serrage (S) et/ou fait saillie latéralement devant l'ouverture de passage (24) de la deuxième paroi latérale, et/ou que la tête (73) soumet à une contrainte la deuxième paroi latérale en direction de la première paroi latérale (17) ou du système de maintien (40).

8. Attelage de remorque selon l'une quelconque des revendications précédentes, **caractérisé en ce qu'**au moins une paroi latérale (15, 16) reliant la première et la deuxième paroi latérale (18), en particulier une paire de parois latérales se faisant face l'une l'autre, est déformée de manière transversale par rapport à l'axe de serrage (S) par le tirant (61), en particulier par sa tête (62).

9. Attelage de remorque selon l'une quelconque des revendications précédentes, **caractérisé en ce que** la surface d'appui (74) est prévue sur un boulon de vissage, qui fait saillie du support (40) par l'intermédiaire d'une section de vissage (63),
en particulier est vissée dans un logement de vis du support (40) ou traverse une ouverture de passage du support (40) et est bloquée avec un écrou, dans lequel la surface d'appui (74) fait saillie à la manière d'un palier latéralement devant la section de vissage (63).

10. Attelage de remorque selon l'une quelconque des revendications précédentes, **caractérisé en ce que** le prolongement (77) est formé par la section de vissage (63) ou une section de boulon (64) prévue entre la section de vissage (63) et la surface d'appui (74).

11. Attelage de remorque selon l'une quelconque des revendications précédentes, **caractérisé en ce que** la surface d'appui (74) est prévue au niveau d'une douille d'appui (70), qui présente une ouverture de passage (71) pour le tirant (61) et est traversée par le tirant (61).

12. Attelage de remorque selon la revendication 11, **caractérisé en ce que** la douille d'appui (70) présente une section de tête (73) présentant un logement de tête (72), dans lequel une tête (62) du tirant (61), en particulier une tête de vissage, est logée, la section de tête (73), en particulier le logement de tête (72), faisant saillie latéralement devant la deuxième ouverture de passage (24), et/ou que la douille d'appui (70) ne fait pas saillie devant un côté extérieur, opposé à la première paroi latérale (17), de la deuxième paroi latérale (18), et/ou que la douille d'appui (70) est en affleurement avec un côté extérieur, et/ou que la douille d'appui (70) est en retrait derrière le côté extérieur ou est sous le plan par rapport au côté extérieur.

13. Attelage de remorque selon l'une quelconque des revendications précédentes, **caractérisé en ce qu'**au moins un tirant (61) ou tous les tirants (61) de l'ensemble de tirant (60) ne font pas saillie devant une paroi latérale de la traverse (12), qui fait face à la paroi latérale (17) logeant la partie faisant saillie d'appui (77), et/ou qu'est prévu sur le support (40) un logement pour le prolongement (77), dans lequel entre le prolongement (77), manière le prolongement (77) prenant avantageusement appui dans le logement de manière transversale par rapport à l'axe de serrage (S), en particulier au niveau de l'ensemble de son périmètre extérieure.

14. Attelage de remorque selon l'une quelconque des revendications précédentes, **caractérisé en ce que** le support (40) présente au moins une surface d'appui latérale, faisant saillie devant la surface de butée (50) à côté de du tirant (61) et reposant sur la traverse (12), de sorte que le support (40) prend appui latéralement sur la traverse (12) à côté du tirant (61) par rapport à une force agissant de manière transversale par rapport à l'axe de serrage (S) du tirant (61).

15. Attelage de remorque selon la revendication 14, **caractérisé en ce qu'**au moins une surface d'appui latérale (51) est une surface d'appui latérale (51) arrondie, ou comprend une telle surface, et/ou que l'au moins une surface d'appui latérale (51) et la surface de butée (50) s'imbriquent l'une dans l'autre en continu et/ou sans arête entre la surface d'appui latérale et la surface de butée et/ou réalisent un contour d'incurvation en particulier circulaire, et/ou que l'au moins une surface d'appui latérale (51) et la surface de butée (50) forment une section transversale en forme de L du support (40) ou sont disposées en forme de L, et/ou que le support (40) prend appui sur la traverse (12) exclusivement à l'aide de l'au moins une surface d'appui latérale (51) et de la surface de butée (50).
